# EUROPÄISCHE PATENTANMELDUNG

(11) **EP 1 710 209 A1**
(43) Veröffentlichungstag der Anmeldung: **11.10.2006**
(21) Anmeldenummer: 05013678.7
(22) Anmeldetag: 24.06.2005
(51) Int. Cl.: C02F 1/32, C02F 1/36

(54) **Vorrichtung zur Reduzierung von Keimen in, vorzugsweise optischen transparenten, Flüssigkeiten mittels Ultraschall und ultravioletter Bestrahlung**

(30) Priorität: 10.04.2005 DE 202005005684 U; 24.04.2005 DE 202005006577 U
(71) Anmelder: Riggers, Wolfgang, 28355 Bremen (DE)
(72) Erfinder: Riggers, Wolfgang, 28355 Bremen (DE)
(74) Vertreter: Manasse, Uwe

(57) **Zusammenfassung**

Vorrichtung zur Reduzierung von Keimen in, vorzugsweise optisch transparenten, Flüssigkeiten, umfassend: ein Gehäuse (12) mit einem Flüssigkeitszulauf (18) und einem Flüssigkeitsablauf (20) für einen Durchlauf von Flüssigkeit, mindestens eine UV-Lichtquelle (22,24,26) in dem Gehäuse, mindestens eine Ultraschallquelle (38,40,42,44,46,48) in dem Gehäuse, und eine erste mechanische Filtereinrichtung (30), die einen Ultraschallbehandlungsbereich, in dem die Ultraschallquelle(n) zum Einwirken auf eine durch das Gehäuse strömende Flüssigkeit und die mechanische(n) Filtereinrichtung(en) angeordnet ist/sind, und einen UV-Behandlungsbereich trennt, in dem die UV-Lichtquelle(n) angeordnet ist/sind.

## Beschreibung

Die vorliegende Erfindung betrifft eine Vorrichtung zur Reduzierung von Keimen in, vorzugsweise optisch transparenten, Flüssigkeiten.

Keime, wie zum Beispiel Viren, Pilze und Bakterien, in Wasser, das als Trinkwasser oder als eine Komponente von wässerigen Lösungen im Rahmen von zum Beispiel humanmedizinischen Therapien verwendet wird, können zu Krankheiten führen bzw. eine Verwendung des Wassers für den jeweiligen Zweck unmöglich machen. Daher stellt die Entkeimung von Flüssigkeiten eine wichtige Aufgabe dar. Übliche Entkeimungsverfahren verwenden Chemikalien, wie zum Beispiel Chlor. Dies ist mit der Verwendung oder Entstehung sehr aggressiver und ihrerseits gesundheitsschädigender Stoffe, wie zum Beispiel Ozon, verbunden.

Der Erfindung liegt somit die Aufgabe zugrunde, für eine gesundheitsschonendere Entkeimung von Flüssigkeiten zu sorgen.

Erfindungsgemäß wird diese Aufgabe gelöst durch eine Vorrichtung zur Reduzierung von Keimen in, vorzugsweise optisch transparenten, Flüssigkeiten, umfassend: ein Gehäuse mit einem Flüssigkeitszulauf und einem Flüssigkeitsablauf für einen Durchlauf von Flüssigkeit, mindestens eine UV-Lichtquelle in dem Gehäuse, mindestens eine Ultraschallquelle in dem Gehäuse, und eine erste mechanische Filtereinrichtung, die einen Ultraschallbehandlungsbereich, in dem die Ultraschallquelle(n) zum Einwirken auf eine durch das Gehäuse strömende Flüssigkeit und die mechanische(n) Filtereinrichtung(en) angeordnet ist/sind, und einen UV-Behandlungsbereich trennt, in dem die UV-Lichtquelle(n) angeordnet ist/sind.

Hier und im nachfolgenden sollen die Angaben, daß mindestens eine UV-Lichtquelle und mindestens eine Ultraschallquelle in dem Gehäuse angeordnet ist, auch die Fälle umfassen, in denen die UV-Lichtquelle bzw. Ultraschallquelle in der Wand des Gehäuses angeordnet oder das UV-Licht bzw. der Ultraschall von außen in das Gehäuse eingekoppelt ist.

Vorzugsweise ist der ersten mechanischen Filtereinrichtung eine zweite mechanische Filtereinrichtung im Gehäuse in Strömungsrichtung vorgeschaltet.

Insbesondere kann dabei vorgesehen sein, daß mindestens eine Ultraschallquelle im Gehäuse vorgesehen ist, die derart angeordnet ist, daß sie die zweite mechanische Filtereinrichtung, vorzugsweise aus einer Richtung in Strömungsrichtung, mit Ultraschall bestrahlt.

Besonders bevorzugt ist eine Durchflußmeß- und -regeleinrichtung zur Messung und Regelung des Durchflusses der Flüssigkeit durch das Gehäuse vorgesehen.

Insbesondere ist eine mit der Durchflußmeß- und -regeleinrichtung verbundene Trübungsmeßeinrichtung zur Messung der Trübung der Flüssigkeit im Bereich des Flüssigkeitszulaufes des Gehäuses vorgesehen und die Durchflußmeß- und -regeleinrichtung gestaltet, um eine automatische Durchflußregelung in Abhängigkeit von den Meßwerten für die Trübung vorzunehmen, die von der Trübungsmeßeinrichtung erhalten werden. Wenn die Messung der Trübungseinrichtung eine hohe Trübung der Flüssigkeit im Bereich des Flüssigkeitszulaufes ergibt, so kann mittels der Durchflußmeß- und -regeleinrichtung dafür gesorgt werden, daß durch entsprechende Verlängerung der Verweildauer der Flüssigkeit in dem Gehäuse durch Reduzierung der Durchflußmenge die zu entkeimende Flüssigkeit dem Ultraschall und dem UV-Licht länger ausgesetzt wird. Dadurch läßt sich ein optimaler Wirkungsgrad der Vorrichtung erreichen.

Günstigerweise ist mindestens eine Ultraschallquelle im Bereich des Flüssigkeitsablaufs im Gehäuse vorgesehen.

Weiterhin kann vorgesehen sein, daß mindestens eine Magnetfeldinduktionseinrichtung zum Induzieren eines Magnetfeldes im Ultraschallbehandlungsbereich vorgesehen ist.

Zweckmäßigerweise ist eine Luftzuführeinrichtung im Bereich des Flüssigkeitsablaufes des Gehäuses zur Zuführung von Luft zur Flüssigkeit vorgesehen. Dies dient dazu, einer Entgasung der Flüssigkeit entgegenzuwirken.

Günstigerweise besteht das Gehäuse aus druckstabilem Kunststoff oder Metall.

Gemäß einer weiteren besonderen Ausführungsform der Erfindung kann vorgesehen sein, daß das Gehäuse die Gestalt eines Zylinders aufweist und mit Ausnahme des Flüssigkeitszulaufes und des Flüssigkeitsablaufes geschlossen ist.

Zweckmäßigerweise ist die bzw. jede UV-Lichtquelle stabförmig gestaltet und erstreckt sie sich parallel zur Längsachse des Zylinders.

Weiterhin kann vorgesehen sein, daß der Flüssigkeitszulauf des Gehäuse an einem Längsende des Zylinders vorgesehen ist und der Flüssigkeitsablauf des Gehäuses an dem anderen Längsende des Zylinders vorgesehen ist.

Gemäß einer weiteren besonderen Ausführungsform umfaßt die erste mechanische Filtereinrichtung einen korbförmigen Filter, der von dem Zylinder koaxial umgeben ist. Selbstverständlich kann der korbförmige Filter aus dem Gehäuse herausnehmbar sein.

Schließlich kann vorgesehen sein, daß die zweite mechanische Filtereinrichtung einen scheibenförmigen Filter umfaßt, der im rechten Winkel zur Längsachse des Zylinders verläuft. Selbstverständlich kann der scheibenförmige Filter ebenfalls aus dem Gehäuse herausnehmbar sein.

Der Erfindung liegt die überraschende Erkenntnis zugrunde, daß durch den Einsatz von Ultraschall und UV-Licht und darüber hinaus in einem jeweiligen Ultraschallbehandlungsbereich bzw. UV-Behandlungsbereich, die durch eine erste mechanische Filtereinrichtung getrennt werden, sowohl Ultraschall als auch UV-Licht auf die Flüssigkeit effektiv einwirken können. Im Ultraschallbehandlungsbereich kommt es durch den Ultraschall zur Ultraschallabtötung als Hauptursache für den mechanischen Zellaufbruch. Neben der mechanischen Erosion der Zellwand induzieren die starken Druck- und Temperaturwechsel die Polymerisierungsreaktionen im Inneren der Zelle, die zum Abbau von globulären Proteinen führen. Diese werden in ihre Untereinheit aufgespaltet, wobei zunächst deren Quartärstruktur zerstört wird. In diesem Zusammenhang sind neben der Abtrennung von niedrig molekularen Peptiden auch die Auf spaltung von zyklischen Aminosäuren beobachtet worden.

Die durch die Ultraschallabtötung entstehenden Schwebeteilchen werden durch die erste mechanische Filtereinrichtung vom Gelangen in den UV-Behandlungsbereich abgehalten. Dadurch kann das UV-Licht von der bzw. den UV-Lichtquelle(n) im UV-Behandlungsbereich tiefer in die Flüssigkeit eindringen. Folglich wird die Wirkung des UV-Lichts verbessert bzw. können UV-Lichtquellen mit geringerer Leistung verwendet werden. Das, insbesondere kurzwellige, UV-Licht wird in Substanzen, wie zum Beispiel DNA, in der Flüssigkeit absorbiert. Die absorbierte UV-Lichtenergie reicht aus, um eine photochemische Umwandlung zu bewirken. Eine für die Teilung der DNA notwendige Informationsweitergabe unterbleibt. Bei der Überschreitung eines Informationsstörungsniveaus sterben Zellen, ohne sich zu vermehren. Somit werden durch UV-Licht lebende Mikroorganismen durch Zerstörung der DNA abgetötet oder inaktiviert. Die Wellenlänge des UV-Lichtes liegt hierfür typischerweise in einem Bereich von 170 bis 260 Nanometer, vorzugsweise bei 254 Nanometer.

Die Vorrichtung ist besonders geeignet bei einem Durchfluß von mehr als 10 Litern pro Minute.

Die erfindungsgemäße Vorrichtung weist einen besonders hohen Wirkungsgrad auf. Sie ist überall einsetzbar, wo die Anzahl der Keime in Flüssigkeiten reduziert werden soll. Dabei kann auch aus stark verseuchtem Wasser ein Wasser mit Trinkwasserqualität erreicht werden.

Je nach Qualität der zu reinigenden Flüssigkeiten kann die Vorrichtung bei verschiedenen Durchflußmengen arbeiten und damit jeweils einen optimalen Wirkungsgrad der Entkeimung erreichen.

Die Vorrichtung kann als Kompaktsystem als mobile Variante oder innerhalb eines existierenden Flüssigkeitsleitungssystems eingesetzt werden. Durch genau dosierte Bestrahlung mit UV-Licht und genau dosierte Bestrahlung mit Ultraschall kann eine Entkeimung mit einem minimalen Energieverbrauch erzielt werden. Die Vorrichtung eliminiert sowohl Bakterien als auch Viren und Schimmelkulturen in verseuchten Flüssigkeiten. Am Flüssigkeitsablauf austretendes, entkeimtes Wasser ist zu 100% trinkbar, ohne weitere chemische Zusätze.

Weitere Merkmale und Vorteile der Erfindung ergeben sich aus den Ansprüchen und aus der nachstehenden Beschreibung, in der ein Ausführungsbeispiel anhand der einzigen schematischen Zeichnung im einzelnen erläutert ist.

Besagte Zeichnung zeigt eine Vertikalschnittansicht durch eine Vorrichtung 10 zur Reduzierung von Keimen gemäß einer besonderen Ausführungsform der Erfindung. Die Vorrichtung 10 umfaßt ein Gehäuse 12, das die Gestalt eines Zylinders aufweist, der an seinem oberen Längsende durch einen Deckel 14 und an seinem unteren Längsende durch einen Deckel 16 verschlossen ist. Der untere Deckel 16 weist einen nicht im Detail dargestellten Flüssigkeitszulauf 18 auf und der obere Deckel 14 weist einen nicht näher dargestellten Flüssigkeitsablauf 20 auf. Im oberen Deckel 14 sind drei stabförmige UV-Lichtquellen 22, 24, 26 mit einem Versatz von 120 Grad zueinander um die Längsachse 28 des Gehäuses 12 angeordnet. Die UV-Lichtquellen 22, 24, 26 erstrecken sich parallel zur Längsachse 28 vom oberen Deckel 14 in das Gehäuse 12 hinein. Die drei UV-Lichtquellen 22, 24, 26 werden ausgehend von deren unteren Enden über einen Teil ihrer Länge in Richtung zum oberen Deckel 14 von einer ersten Filtereinrichtung umgeben, die einen korbförmigen Filter 30 umfaßt, der vom Gehäuse 12 koaxial umgeben wird. Der korbformige Filter 30 ist nur über einen unteren Teilbereich durchlässig und umgibt die drei UV-Lichtquellen 22, 24 und 26 nicht in deren zum oberen Deckel 14 benachbarten Bereich, so daß über den Flüssigkeitszulauf 18 in das Gehäuse 12 eintretende Flüssigkeit durch den korbförmigen Filter 30 zum Flüssigkeitsablauf 20 gelangen kann. In drei zueinander beabstandeten Ebenen 32, 34 und 36 in vertikaler Richtung sind jeweils drei Ultraschallquellen mit einem Versatz von 120 Grad zueinander um die Längsachse 28 des Gehäuses 12 angeordnet, von denen jedoch nur jeweils zwei, nämlich 38 und 40, 42 und 44 sowie 46 und 48 gezeigt sind. Besagte Ultraschallquellen sind so in der Zylinderwand 50 des Gehäuses 12 angeordnet, daß sie den durchlässigen Teil der Zylinderwand 52 des Filters 30 in radialer Richtung von außen bestrahlen. Dadurch wird zum einen die in dem durch den Filter 30 von dem UV-Behandlungsbereich 54 abgetrennten Ultraschallbehandlungsbereich 56 fließende Flüssigkeit mit Ultraschall beaufschlagt und zum andern der Filter 30 von den resultierenden Schwebeteilchen gereinigt. Die vom Filter 30 entfernten Schwebeteilchen sammeln sich in den durch 58 und 60 gekennzeichneten Bereichen und können später in einem Spülvorgang entfernt werden. Der Ultraschall bewirkt auch eine homogene Flüssigkeitsstruktur. Der Abstand zwischen dem Filter 30 und einer jeweiligen UV-Lichtquelle 22, 26, 28 liegt im Bereich von 1 cm.

Dem Filter 30 ist in Strömungsrichtung eine zweite Filtereinrichtung vorgeschaltet, die einen scheibenförmigen Filter 62 umfaßt. Der scheibenförmige Filter 62 erstreckt sich quer zur Längsachse 28 des Gehäuses 12. Er ist in seinem mittleren Bereich 64 durchlässig. In dem unteren Deckel 16 sind mehrere Ultraschallquellen, von denen vier mit den Bezugszeichen 66, 68, 70 und 72 gekennzeichnet sind, vorgesehen, die derart angeordnet sind, daß sie auf den mittleren Bereich 64 im rechten Winkel einstrahlen. Besagte Ultraschallquellen 66, 68, 70 und 72 dienen zum einen dazu, die durch den Flüssigkeitszulauf 18 eintretende Flüssigkeit mit Ultraschall zu bestrahlen, und zum anderen dazu, den Filter 62 zu reinigen.

Wenn die Flüssigkeit sowohl den Filter 62 als auch den Filter 30 passiert hat, ist sie zumindest nahezu schwebeteilchenfrei, so daß dann das UV-Licht von den UV-Lichtquellen 22, 24 und 26 tiefer in die Flüssigkeit eindringen und die oben beschriebenen Wirkungen erreichen kann.

Zur weiteren Steigerung des Wirkungsgrades weist die Vorrichtung eine Trübungsmeßeinrichtung 74 im Bereich des Flüssigkeitszulaufes 18 auf, die mit einer Durchflußregeleinrichtung 76 in Verbindung steht, die gemeinsam mit einer Durchflußmeßeinrichtung 78 eine Durchflußmeß- und -regeleinrichtung bildet. Dazu weist die Durchflußregeleinrichtung 76 ein damit in Verbindung stehendes Regelventil 80 auf. Die Durchflußmeß- und -regeleinrichtung dient zur Regelung des Durchflusses von Flüssigkeit durch das Gehäuse in Abhängigkeit von den Meßwerten der Trübungsmeßeinrichtung. Wenn die zu entkeimende Flüssigkeit eine hohe Trübung aufweist, so wird eine längere Verweilzeit in dem Gehäuse eingestellt, indem die Durchflußmenge reduziert wird. Selbstverständlich könnte in Abhängigkeit von der Trübungsmessung auch der Betrieb der Ultraschallquellen gesteuert bzw. geregelt werden. Beispielsweise könnte die Leistung der Ultraschallquellen oder deren Betriebszeiten variiert werden.

Des weiteren sind auf drei verschiedenen Ebenen in vertikaler Richtung Magnetfeldinduktionseinrichtung vorgesehen, von denen hier die mit den Bezugszeichen 82, 84 und 86 gekennzeichneten zu sehen sind.

Schließlich ist im Bereich des Flüssigkeitsablaufes 20 eine Luftzuftihreinrichtung 88 zur Zuführung von Luft zur Flüssigkeit beim Austritt aus dem Gehäuse 12 vorgesehen.

Auch wenn hier ein Gehäuse mit einem kreisförmigen Querschnitt beschrieben ist, kann es selbstverständlich auch einen anderen Querschnitt, zum Beispiel quadratischen Querschnitt, aufweisen.

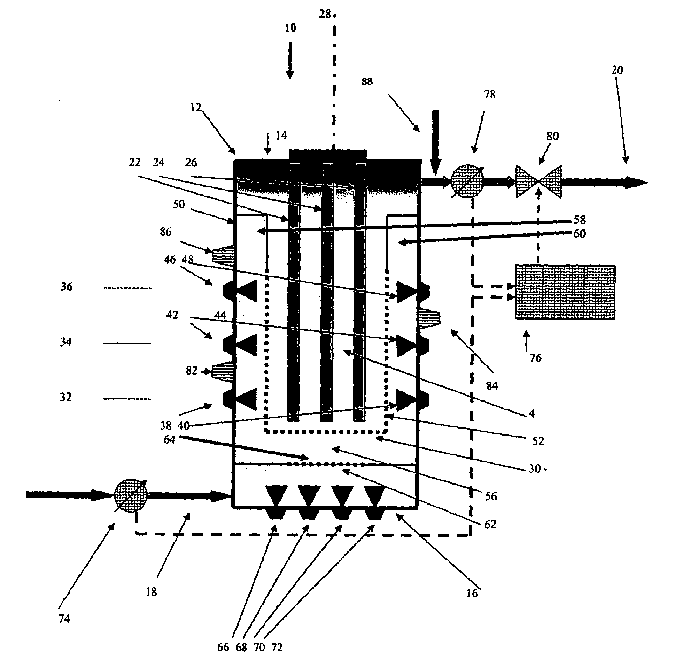

Die in der vorliegenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Vorrichtung (10) zur Reduzierung von Keimen in, vorzugsweise optisch transparenten, Flüssigkeiten, umfassend:
- ein Gehäuse (12) mit einem Flüssigkeitszulauf (18) und einem Flüssigkeitsablauf (20) für einen Durchlauf von Flüssigkeit,
- mindestens eine UV-Lichtquelle (22, 24, 26) in dem Gehäuse (12),
- mindestens eine Ultraschallquelle (38, 40; 42, 44, 46, 48) in dem Gehäuse (12), und
- eine erste mechanische Filtereinrichtung, die einen Ultraschallbehandlungsbereich (56), in dem die Ultraschallquelle(n) (38, 40; 42, 44, 46, 48) zum Einwirken auf eine durch das Gehäuse (12) strömende Flüssigkeit und die mechanische(n) Filtereinrichtung(en) angeordnet ist/sind, und einen UV-Behandlungsbereich (54) trennt, in dem die UV-Lichtquelle(n) (22, 24, 26) angeordnet ist/sind.

2. Vorrichtung (10) nach Anspruch 1, **dadurch gekennzeichnet, daß** der ersten mechanischen Filtereinrichtung eine zweite mechanische Filtereinrichtung im Gehäuse (12) in Strömungsrichtung vorgeschaltet ist.

3. Vorrichtung (10) nach Anspruch 2, **dadurch gekennzeichnet, daß** mindestens eine Ultraschallquelle (66, 68, 70 72) im Gehäuse (12) vorgesehen ist, die derart angeordnet ist, daß sie die zweite mechanische Filtereinrichtung, vorzugsweise aus einer Richtung in Strömungsrichtung, mit Ultraschall bestrahlt.

4. Vorrichtung (10) nach einem der vorangehenden Ansprüche, **dadurch gekennzeichnet, daß** eine Durchflußmeß- (78) und -regeleinrichtung (76) zur Messung und Regelung des Durchflusses der Flüssigkeit durch das Gehäuse (12) vorgesehen ist.

5. Vorrichtung (10) nach Anspruch 4, **dadurch gekennzeichnet, daß** eine mit der Durchflußmeß- (78) und -regeleinrichtung (76) verbundene Trübungsmeßeinrichtung (74) zur Messung der Trübung der Flüssigkeit im Bereich des Flüssigkeitszulaufes (18) des Gehäuses (12) vorgesehen ist und die Durchflußmeß- (78) und -regeleinrichtung (76) gestaltet ist, um eine automatische Durchflußregelung in Abhängigkeit von den Meßwerten für die Trübung vorzunehmen, die von der Trübungsmeßeinrichtung (74) erhalten werden.

6. Vorrichtung (10) nach einem der vorangehenden Ansprüche, **dadurch gekennzeichnet, daß** mindestens eine Ultraschallquelle im Bereich des Flüssigkeitsablaufs (20) im Gehäuse (12) vorgesehen ist.

7. Vorrichtung (10) nach einem der vorangehenden Ansprüche, **dadurch gekennzeichnet, daß** mindestens eine Magnetfeldinduktionseinrichtung (82, 84, 86) zum Induzieren eines Magnetfeldes im Ultraschallbehandlungsbereich (56) vorgesehen ist.

8. Vorrichtung (10) nach einem der vorangehenden Ansprüche, **dadurch gekennzeichnet, daß** eine Luftzuführeinrichtung (88) im Bereich des Flüssigkeitsablaufes (20) des Gehäuses (12) zur Zuführung von Luft zur Flüssigkeit vorgesehen ist.

9. Vorrichtung (10) nach einem der vorangehenden Ansprüche, **dadurch gekennzeichnet, daß** das Gehäuse (12) aus druckstabilem Kunststoff oder Metall besteht.

10. Vorrichtung (10) nach einem der vorangehenden Ansprüche, **dadurch gekennzeichnet, daß** das Gehäuse (12) die Gestalt eines Zylinders aufweist und mit Ausnahme des Flüssigkeitszulaufes (18) und des Flüssigkeitsablaufes (20) geschlossen ist.

11. Vorrichtung (10) nach Anspruch 10, **dadurch gekennzeichnet, daß** die bzw. jede UV-Lichtquelle (22, 24, 26) stabförmig gestaltet ist und sich parallel zur Längsachse des Zylinders erstreckt.

12. Vorrichtung (10) nach Anspruch 11, **dadurch gekennzeichnet, daß** der Flüssigkeitszulauf (18) des Gehäuse (12) an einem Längsende des Zylinders vorgesehen ist und der Flüssigkeitsablauf (20) des Gehäuses (12) an dem anderen Längsende des Zylinders vorgesehen ist.

13. Vorrichtung (10) nach Anspruch 12, **dadurch gekennzeichnet, daß** die erste mechanische Filtereinrichtung einen korb formigen Filter (30) umfaßt, der von dem Zylinder koaxial umgeben ist.

14. Vorrichtung (10) nach Anspruch 13, **dadurch gekennzeichnet, daß** die zweite mechanische Filtereinrichtung einen scheibenförmigen Filter (30) umfaßt, der im rechten Winkel zur Längsachse des Zylinders verläuft.
